# EUROPEAN PATENT SPECIFICATION

(11) **EP 3 862 392 B1**
(45) Date of publication and mention of the grant of the patent: **28.01.2026**
(21) Application number: 18936259.3
(22) Date of filing: 04.10.2018
(51) Int. Cl.: C08K 5/06, C08K 5/103, C08L 23/08, B32B 27/32, C08J 5/18, C08K 5/42

(54) **MODIFIER FOR POLYOLEFIN RESIN**
MODIFIZIERUNGSMITTEL FÜR EIN POLYOLEFINHARZ
AGENT DE MODIFICATION POUR RÉSINE POLYOLÉFINIQUE

(43) Date of publication of application: 11.08.2021
(73) Proprietor: Takemoto Yushi Kabushiki Kaisha, Gamagori-shi, Aichi 443-8611 (JP)
(72) Inventor: SATO, Shumma, Gamagori-shi, Aichi 443-8611 (JP); OYA, Satoshi, Gamagori-shi, Aichi 443-8611 (JP); NISHI, Yusuke, Gamagori-shi, Aichi 443-8611 (JP)
(74) Representative: Daub, Thomas
(86) International application number: PCT/JP2018/037128
(87) International publication number: WO 2020/070846

(56) References cited:
- JP-A- 2001 200 109
- JP-A- 2005 200 628
- JP-A- 2018 100 390
- JP-A- S5 191 953
- JP-A- S6 285 942
- JP-A- S6 323 986
- DATABASE WPI Week 200682, Derwent World Patents Index; AN 2006-806667, XP002806046
- DATABASE WPI Week 197539, Derwent World Patents Index; AN 1975-64444W, XP002806047
- DATABASE WPI Week 197907, Derwent World Patents Index; AN 1979-13145B, XP002806048
- DATABASE WPI Week 200427, Derwent World Patents Index; AN 2004-286058, XP002806049

## Description

### TECHNICAL FIELD

The present invention relates to a modifying agent for polyolefin resin, a polyolefin resin composition containing such a modifying agent, a modified polyolefin resin film containing such a modifying agent, and a laminated film in which a resin layer on at least one surface contains such a modifying agent.

### BACKGROUND ART

Films formed from a polyolefin resin composition are widely used in packaging materials and the like. However, since a polyolefin resin has a hydrophobic property, it has the problem of causing charging due to static electricity, fogging, and the like.

In order to solve such problems, for example, modifying agents for polyolefin resin disclosed in Patent Documents 1 to 10 are known.

Patent Document 1 discloses a modifying agent containing a partial ester of a polyol with an aliphatic monocarboxylic acid, a nonionic surfactant such as alkyldiethanolamine, and an organic sulfonic acid salt such as an alkali metal salt of an alkylsulfonic acid or an alkali metal salt of an alkylarylsulfonic acid.

Patent Document 2 discloses a modifying agent containing an ester compound of an aliphatic alcohol with an aliphatic monocarboxylic acid, an alkylene oxide adduct such as an alkylene oxide adduct of an aliphatic monocarboxylic acid, and an organic sulfonic acid salt such as an alkali metal salt of an alkylsulfonic acid or an alkali metal salt of an alkali arylsulfonic acid.

Patent Document 3 discloses a modifying agent containing a polyglycerin fatty acid ester, a polyoxyalkylene alkylamine, a higher aliphatic alcohol, and a higher fatty acid glycerin ester.

Patent Document 4 discloses a modifying agent containing a glycerin fatty acid ester, a polyglycerin fatty acid ester, an aliphatic amine ethylene oxide adduct, and a fatty acid amide in a predetermined composition.

Patent Document 5 discloses an ethylene-based resin composition capable of obtaining a film having prevention performance, improved slip performance and anti-block performance. The ethylenic resin composition contains a glycerol fatty acid ester, a propylene glycol fatty acid ester and a fatty acid bisamide.

Patent Document 6 describes an antifogging agent for synthetic resins, and more particularly, to the formation of a synthetic resin such as a polyolefin resin, a polyvinyl chloride resin or an ethylene-vinyl acetate copolymer resin by adding the same. The antifogging agent basically contains an alkylene oxide adduct of an alkylated phenol formalin condensate, a styrenated phenol formalin condensate or a benzylated phenol formalin condensate, a polyhydric alcohol, and an aliphatic acid ester.

Patent Document 7 discloses a plastic film with improved anti-fog properties by using glycol fatty acid monoesters. The fatty acid monoesters include saturated and unsaturated fatty acids having 8 to 24 carbon atoms. The film contains a resin being an olefin polymer or 1,2-polybutadiene, and the olefin polymer includes low-density polyethylene, high-density polyethylene, polypropylene, and the like.

Patent Document 8 describes a light-transmitting moisture-absorbent film and a process for producing the same. The film contains a zeolite, an oxide and an ester compound as well as a thermoplastic resin, wherein the zeolite, the oxide, and the ester compound are dispersed in the thermoplastic resin. The ester compound can be a monoester of an alkylene glycol having 2 to 6 carbon atoms and a fatty acid having 15 to 21 carbon atoms. The thermoplastic resin can be selected from low density polyethylene, linear low density polyethylene, ethylene-(meth)acrylic acid alkyl ester copolymer and ethylene.

Patent Document 9 describes a multilayer molded article having improved dew condensation prevention properties and discloses a nonionic surfactant having a specific HLB value and a specific amount of an alcohol-based plasticizer with respect to an ethylene-vinyl alcohol copolymer resin having a specific ethylene content. The surfactant can include sucrose fatty acid esters, glycerin fatty acid esters, nurbitan fatty acid esters, propylene gericol fatty acid esters as well as non-ionic surfactants such as polyoxyethylene alkyl allyl ethers and the like.

Patent Document 10 discloses a single layer or laminated packaging film in which a layer to be packaged comes into contact with a polyolefin resin composition, and the layer to be packaged comes into contact with the polyolefin resin. The polyolefin resin contains components A, B and C. Component A is a partial ester compound of 3-6 valent aliphatic alcohol and C8-22 aliphatic monocarboxylic acid. Component B is an alkyl sulfonic acid alkali metal salt of alkyl group having 6 to 22 carbon atoms, alkyl aryl sulfonic acid alkali metal salt of alkyl group having 2 to 22 carbon atoms. Component C is one or more selected from oxide-based inorganic particles, silicate-based inorganic particles, and organic crosslinked particles.

### PRIOR ART LITERATURE

### PATENT LITERATURE

Patent Document 1: Japanese Patent Laid-Open No. 2003-236910
Patent Document 2: Japanese Patent Laid-Open No. 2005-200628
Patent Document 3: Japanese Patent Laid-Open No. 03-212435
Patent Document 4: Japanese Patent Laid-Open No. 2016-60909
Patent Document 5: JP 2001-200109 A
Patent Document 6: JP63-23986 A
Patent Document 7: JP 51-91953 A
Patent Document 8: JP 2018 100 390 A
Patent Document 9: JP S6 285 942 A
Patent Document 10: JP 2005 200 628 A

### SUMMARY OF THE INVENTION

### PROBLEMS THAT THE INVENTION IS TO SOLVE

However, the conventional modifying agents disclosed in Patent Documents 1 to 3 have the following problem: they require time for the antifogging effect to appear on the polyolefin resin, and if the amount of the modifying agent added is increased to improve these effects, the heat sealability is adversely affected. The modifying agent disclosed in Patent Document 4 is reported to be able to impart reasonable antifogging property to polyolefin resins, but it still has the problem of adversely affecting heat sealability.

The problem to be solved by the present invention is to provide a modifying agent for polyolefin resin, a polyolefin resin composition, a modified polyolefin resin film, and a laminated film that can impart excellent antifogging property to a polyolefin resin without adversely affecting the original heat sealability of the polyolefin resin.

### MEANS FOR SOLVING THE PROBLEMS

As a result of research to solve the above problems, the inventors of the present invention have found that a modifying agent for polyolefin resin containing a specific ester compound and a specific nonionic surfactant is very suitable.

In order to achieve the above object, in one aspect of the present invention, there is provided a modifying agent for polyolefin resin containing an ester compound and a nonionic surfactant, wherein the mass ratio of the content of the ester compound to the content of the nonionic surfactant is (ester compound)/(nonionic surfactant) = 10/90 to 30/70.

The ester compound is at least one selected from the group consisting of partial esters of a dihydric alcohol having 2 to 4 carbon atoms with an aliphatic monocarboxylic acid having 8 to 22 carbon atoms.

The nonionic surfactant is at least one selected from the group consisting of a partial ester of a tri- to hexahydric alcohol with an aliphatic monocarboxylic acid having 8 to 22 carbon atoms, an ester compound represented by Chemical Formula 1 below, and an ether compound represented by Chemical Formula 2 below.
The modifying agent for a polyolefin resin further contains an organic sulfonic acid salt that is at least one selected from the group consisting of an alkali metal salt of an alkylsulfonic acid having 6 to 22 carbon atoms in the alkyl group, an alkali metal salt of an alkylarylsulfonic acid having 6 to 22 carbon atoms in the alkyl group, and an alkali metal salt of a sulfonated aliphatic ester having 6 to 22 carbon atoms in the alkyl group, and the mass ratio of the sum of the content of the ester compound and the content of the nonionic surfactant to the content of the organic sulfonic acid salt is preferably (ester compound + nonionic surfactant)/organic sulfonic acid salt = 99/1 to 50/50.

[Chemical Formula 1] R¹-CO-O-R²-OH

(In Chemical Formula 1,
R¹ is a hydrocarbon group having 5 to 21 carbon atoms, and
R² is a residue obtained by removing all hydroxyl groups from a (poly) oxyalkylene glycol having 2 to 200 carbon atoms and having a (poly) oxyalkylene group composed of oxyalkylene units having 2 to 4 carbon atoms in the molecule.)

[Chemical Formula 2] R³-O-R⁴-OH

(In Chemical Formula 2,
R³ is a hydrocarbon group having 6 to 22 carbon atoms, and
R⁴ is a residue obtained by removing all hydroxyl groups from a (poly) oxyalkylene glycol having 2 to 200 carbon atoms and having a (poly) oxyalkylene group composed of oxyalkylene units having 2 to 4 carbon atoms in the molecule.)

The ester compound is preferably at least one selected from the group consisting of monoesters of propylene glycol with an aliphatic monocarboxylic acid having 12 to 18 carbon atoms.

The nonionic surfactant is preferably at least one selected from the group consisting of partial esters of a polyhydric alcohol represented by Chemical Formula 3 below or sorbitan with an aliphatic monocarboxylic acid having 12 to 18 carbon atoms.

[Chemical Formula 3] HO-(CH₂-CHOH-CH₂-O-)ₙ-H

(In Chemical Formula 3, n is an integer of 1 to 4.

The ester compound is preferably a monoester of propylene glycol with oleic acid.

The ester compound is preferably at least one selected from the group consisting of monoesters of propylene glycol with an aliphatic monocarboxylic acid having 12 to 18 carbon atoms, and the nonionic surfactant is preferably a partial ester of a polyhydric alcohol represented by Chemical Formula 3 with oleic acid.

The ester compound is preferably a monoester of propylene glycol with oleic acid, and the nonionic surfactant is preferably a partial ester of a polyhydric alcohol represented by Chemical Formula 3 with oleic acid.

The organic sulfonic acid salt is preferably at least one selected from the group consisting of alkali metal salts of an alkylsulfonic acid having 6 to 22 carbon atoms in the alkyl group.

In another aspect of the present invention, there is provided a polyolefin resin composition containing the modifying agent for polyolefin resin and a polyolefin resin, wherein the modifying agent for polyolefin resin is contained in the polyolefin resin at a ratio of 0.45% to 5.0% by mass.

In another aspect of the present invention, there is provided a modified polyolefin resin film formed from the polyolefin resin composition.

In another aspect of the present invention, there is provided a modified polyolefin resin film containing the modifying agent for polyolefin resin at a ratio of 0.45% to 5.0% by mass.

In another aspect of the present invention, there is provided a laminated film in which at least one surface layer is composed of a resin layer made of the polyolefin resin composition.

In another aspect of the present invention, there is provided a laminated film in which at least one surface layer is composed of a resin layer containing the modifying agent for polyolefin resin at a ratio of 0.45% to 5.0% by mass.

### EFFECT OF THE INVENTION

The present invention succeeds in imparting excellent heat sealability and antifogging property to a polyolefin resin.

### MODES FOR CARRYING OUT THE INVENTION

### (First Embodiment)

First, a first embodiment that embodies a modifying agent for polyolefin resin (hereinafter referred to as modifying agent) according to the present invention will be described.

Examples of the ester compound used in the modifying agent of the present embodiment include at least one selected from the group consisting of partial esters of a dihydric alcohol having 2 to 4 carbon atoms with an aliphatic monocarboxylic acid having 8 to 22 carbon atoms. These may be used alone or in combinations of two or more.

In the partial ester of a dihydric alcohol having 2 to 4 carbon atoms with an aliphatic monocarboxylic acid having 8 to 22 carbon atoms, specific examples of the dihydric alcohol having 2 to 4 carbon atoms include ethylene glycol, propylene glycol, and butylene glycol. Specific examples of the aliphatic monocarboxylic acid having 8 to 22 carbon atoms include caprylic acid, pelargonic acid, capric acid, undecylic acid, undecylenic acid, lauric acid, tridecylic acid, myristic acid, pentadecylic acid, palmitic acid, margaric acid, stearic acid, isostearic acid, arachidic acid, heneicosylic acid, docosanoic acid, oleic acid, linoleic acid, linolenic acid, erucic acid, 12-hydroxystearic acid, and ricinoleic acid.

Among the partial esters of a dihydric alcohol having 2 to 4 carbon atoms with an aliphatic monocarboxylic acid having 8 to 22 carbon atoms, from the viewpoint of further improving the effects of the present invention, a partial ester of propylene glycol with an aliphatic monocarboxylic acid having 12 to 18 carbon atoms is preferred, and a partial ester of propylene glycol with oleic acid is more preferred. The partial ester of a dihydric alcohol having 2 to 4 carbon atoms with an aliphatic monocarboxylic acid having 8 to 22 carbon atoms preferably has a monoester content of 40% by mass or more among all the partial ester contents.

The nonionic surfactant to be used in the modifying agent of the present embodiment is at least one selected from the group consisting of a partial ester of a tri- to hexahydric alcohol with an aliphatic monocarboxylic acid having 8 to 22 carbon atoms, an ester compound represented by Chemical Formula 4 below, and an ether compound represented by Chemical Formula 5 below. These may be used alone or in combinations of two or more.

[Chemical Formula 4] R¹-CO-O-R²-OH

(In Chemical Formula 4,
R¹ is a hydrocarbon group having 5 to 21 carbon atoms, and
R² is a residue obtained by removing all hydroxyl groups from a (poly) oxyalkylene glycol having 2 to 200 carbon atoms and having a (poly) oxyalkylene group composed of oxyalkylene units having 2 to 4 carbon atoms in the molecule.)

[Chemical Formula 5] R³-O-R⁴-OH

(In Chemical Formula 5,
R³ is a hydrocarbon group having 6 to 22 carbon atoms, and
R⁴ is a residue obtained by removing all hydroxyl groups from a (poly) oxyalkylene glycol having 2 to 200 carbon atoms and having a (poly) oxyalkylene group composed of oxyalkylene units having 2 to 4 carbon atoms in the molecule.)

In the partial ester of a tri- to hexahydric alcohol with an aliphatic monocarboxylic acid having 8 to 22 carbon atoms, specific examples of the tri- to hexahydric alcohol include (1) polyhydric alcohols, such as glycerin, pentaerythritol, sorbitol, and glucose, (2) cyclic ether polyhydric alcohols obtained by dehydration of sorbitol, such as sorbitan or sorbide, (3) (poly)ether tetraols, such as diglycerin and ethylene glycol diglyceryl ether, (4) (poly)ether pentaols, such as triglycerin and trimethylolpropane diglyceryl ether, and (5) (poly)ether hexaols, such as tetraglycerin and dipentaerythritol. Specific examples of the aliphatic monocarboxylic acid having 8 to 22 carbon atoms include caprylic acid, pelargonic acid, capric acid, undecylic acid, undecylenic acid, lauric acid, tridecylic acid, myristic acid, pentadecylic acid, palmitic acid, margaric acid, stearic acid, isostearic acid, arachidic acid, heneicosylic acid, docosanoic acid, oleic acid, linoleic acid, linolenic acid, erucic acid, 12-hydroxystearic acid, and ricinoleic acid.

Specific examples of the ester compound represented by Chemical Formula 4 include (1) aliphatic monocarboxylic acids having 6 to 22 carbon atoms to which one of alkylene oxides having 2 to 4 carbon atoms is added, (2) aliphatic monocarboxylic acids having 6 to 22 carbon atoms to which two or more types of alkylene oxides having 2 to 4 carbon atoms are added, (3) monoesters of an aliphatic monocarboxylic acid having 6 to 22 carbon atoms with polyoxyalkylene glycol having polyoxyalkylene groups composed of oxyalkylene units having 2 to 4 carbon atoms, and (4) monoesters of an aliphatic monocarboxylic acid having 6 to 22 carbon atoms with a diol compound having 2 to 4 carbon atoms, such as ethylene glycol or propylene glycol. In such an ester compound, specific examples of the aliphatic monocarboxylic acid having 6 to 22 carbon atoms used as one raw material include the same as the specific examples of the aliphatic monocarboxylic acid having 8 to 22 carbon atoms listed in the description of a partial ester of a tri- to hexahydric alcohol with an aliphatic monocarboxylic acid having 8 to 22 carbon atoms. Specific examples of the alkylene oxide having 2 to 4 carbon atoms used as another raw material include ethylene oxide, propylene oxide, 1,2-butylene oxide, and 1,4-butylene oxide. When two or more of these alkylene oxides are used, examples of the addition form of the alkylene oxide to the aliphatic monocarboxylic acid having 6 to 22 carbon atoms include random addition, block addition, and random block addition. The number of moles of alkylene oxide added to 1 mol of an aliphatic monocarboxylic acid having 6 to 22 carbon atoms is such that the total number of carbon atoms of the alkylene oxide is in the range of 2 to 200. Specific examples of the (poly) oxyalkylene glycol having a (poly) oxyalkylene group composed of oxyalkylene units having 2 to 4 carbon atoms used as another raw material include ethylene glycol, propylene glycol, polyethylene glycol, polypropylene glycol, polybutylene glycol, and polyethylene glycolpolypropylene glycol block polymer. The amount of the (poly) oxyalkylene glycol used per mole of the aliphatic monocarboxylic acid having 6 to 22 carbon atoms is such that the total number of carbon atoms of the (poly) oxyalkylene glycol is in the range of 2 to 200. Among the ester compound represented by Chemical Formula 4 described above, it is preferable that R¹ is a hydrocarbon having 7 to 17 carbon atoms, and R² is a residue obtained by removing all hydroxyl groups from a (poly) oxyalkylene glycol having 2 to 200 carbon atoms and having a (poly) oxyalkylene group composed of an oxyalkylene group having 2 or 3 carbon atoms in the molecule.

Specific examples of the ether compound represented by Chemical Formula 5 include (1) a monohydric aliphatic alcohol having 6 to 22 carbon atoms to which one of alkylene oxides having 2 to 4 carbon atoms is added, and (2) a monohydric aliphatic alcohol having 6 to 22 carbon atoms to which two or more types of alkylene oxides having 2 to 4 carbon atoms are added. In such an ether compound, specific examples of the monohydric aliphatic alcohol having 6 to 22 carbon atoms used as one raw material include capron alcohol, heptyl alcohol, capryl alcohol, pelargone alcohol, caprin alcohol, undecyl alcohol, lauryl alcohol, tridecyl alcohol, myristyl alcohol, pentadecyl alcohol, cetyl alcohol, isocetyl alcohol, heptadecyl alcohol, stearyl alcohol, isostearyl alcohol, arachidyl alcohol, behenyl alcohol, palmitrail alcohol, oleyl alcohol, linoleil alcohol, linolenyl alcohol, erucyl alcohol, ricinorail alcohol, and secondary alcohol having 6 to 22 carbon atoms. Specific examples of the alkylene oxide having 2 to 4 carbon atoms used as the other raw material include the same as the specific examples of the alkylene oxide having 2 to 4 carbon atoms listed in the description of the ester compound of Chemical Formula 4.

Although the nonionic surfactant has been described above, among these, from the viewpoint of further improving the effect of the present invention, a partial ester of glycerin, glycerin condensate, or sorbitan with an aliphatic monocarboxylic acid having 8 to 18 carbon atoms is preferable, a partial ester of a polyhydric alcohol represented by Chemical Formula 6 below or sorbitan with an aliphatic monocarboxylic acid having 12 to 18 carbon atoms is more preferable, and a partial ester of glycerin and glycerin condensate with oleic acid is even more preferable.

[Chemical Formula 6] HO-(CH₂-CHOH-CH₂-O-)ₙ-H

(In Chemical Formula 3, n is an integer of 1 to 4.)

The partial ester of a tri- to hexahydric alcohol with an aliphatic monocarboxylic acid having 8 to 22 carbon atoms can be obtained from an appropriate combination of the polyhydric alcohol and the aliphatic carboxylic acid described above. In all cases, the obtained partial ester has at least one free hydroxyl group in the molecule. The content of the monoester is preferably 30% by mass or more of the content of all these partial esters.

The modifying agent of the present embodiment contains the ester compound and the nonionic surfactant described above. As a preferable combination of the ester compound and the nonionic surfactant, the ester compound is at least one selected from the group consisting of monoesters of propylene glycol with an aliphatic monocarboxylic acid having 12 to 18 carbon atoms, and the nonionic surfactant is a partial ester of a polyhydric alcohol represented by Chemical Formula 6 with oleic acid. As a more preferable combination, the ester compound is a monoester of propylene glycol with oleic acid, and the nonionic surfactant is a partial ester of a polyhydric alcohol represented by Chemical Formula 6 with oleic acid.

In the modifying agent of the present embodiment, the mass ratio of the content of the ester compound to the content of the nonionic surfactant is (ester compound)/(nonionic surfactant) = 10/90 to 30/70. By defining the mass ratio of the ester compound and the nonionic surfactant within such a numerical range, the effect of the present invention can be improved, and furthermore, the antistatic property can be improved.

In addition to the ester compound and the nonionic surfactant, it is preferable to add the organic sulfonic acid salt described later to the modifying agent of the present embodiment. When such an organic sulfonic acid salt is included in the modifying agent of the present embodiment, the content of the organic sulfonic acid salt in the modifying agent is preferably 50% by mass or less from the viewpoint of improving antifogging property and antistatic property. The mass ratio of the sum of the content of the ester compound and the content of the nonionic surfactant to the content of such organic sulfonic acid salt is preferably (ester compound + nonionic surfactant)/organic sulfonic acid salt = 99/1 to 50/50. With such a configuration, the effect of the present invention can be further improved, and furthermore, the stickiness of the film surface due to storage over time can be reduced.

Examples of the organic sulfonic acid salt to be blended in the modifying agent of the present embodiment include at least one selected from the group consisting of an alkali metal salt of an alkylsulfonic acid having 6 to 22 carbon atoms in the alkyl group, an alkali metal salt of an alkylarylsulfonic acid having 6 to 22 carbon atoms in the alkyl group, and an alkali metal salt of a sulfonated aliphatic ester having 6 to 22 carbon atoms in the alkyl group. These may be used alone or in combinations of two or more.

Specific examples of the alkali metal salt of an alkylsulfonic acid having 6 to 22 carbon atoms in the alkyl group include lithium hexylsulfonate, sodium hexylsulfonate, potassium hexylsulfonate, lithium octylsulfonate, sodium octylsulfonate, potassium octylsulfonate, lithium nonylsulfonate, sodium nonylsulfonate, potassium nonylsulfonate, lithium decylsulfonate, sodium decylsulfonate, potassium decylsulfonate, lithium undecylsulfonate, sodium undecylsulfonate, potassium undecylsulfonate, lithium dodecylsulfonate, sodium dodecylsulfonate, potassium dodecylsulfonate, lithium tridecylsulfonate, sodium tridecylsulfonate, potassium tridecylsulfonate, lithium tetradecylsulfonate, sodium tetradecylsulfonate, potassium tetradecylsulfonate, lithium pentadecylsulfonate, sodium pentadecylsulfonate, potassium pentadecylsulfonate, lithium hexadecylsulfonate, sodium hexadecylsulfonate, potassium hexadecylsulfonate, lithium heptadecylsulfonate, sodium heptadecylsulfonate, potassium heptadecylsulfonate, lithium octadecylsulfonate, sodium octadecylsulfonate, potassium octadecylsulfonate, lithium behenylsulfonate, sodium behenylsulfonate, and potassium behenylsulfonate.

Specific examples of the alkali metal salt of an alkylarylsulfonic acid having 6 to 22 carbon atoms in the alkyl group include lithium hexylbenzenesulfonate, sodium hexylbenzenesulfonate, potassium hexylbenzenesulfonate, lithium octylbenzenesulfonate, sodium octylbenzenesulfonate, potassium octylbenzenesulfonate, lithium nonylbenzenesulfonate, sodium nonylbenzenesulfonate, potassium nonylbenzenesulfonate, lithium decylbenzenesulfonate, sodium decylbenzenesulfonate, potassium decylbenzenesulfonate, lithium undecylbenzenesulfonate, sodium undecylbenzenesulfonate, potassium undecylbenzenesulfonate, lithium dodecylbenzenesulfonate, sodium dodecylbenzenesulfonate, potassium dodecylbenzenesulfonate, lithium tridecylbenzenesulfonate, sodium tridecylbenzenesulfonate, potassium tridecylbenzenesulfonate, lithium tetradecylbenzenesulfonate, sodium tetradecylbenzenesulfonate, potassium tetradecylbenzenesulfonate, lithium pentadecylbenzenesulfonate, sodium pentadecylbenzenesulfonate, potassium pentadecylbenzenesulfonate, lithium hexadecylbenzenesulfonate, sodium hexadecylbenzenesulfonate, potassium hexadecylbenzenesulfonate, lithium heptadecylbenzenesulfonate, sodium heptadecylbenzenesulfonate, potassium heptadecylbenzenesulfonate, lithium octadecylbenzenesulfonate, sodium octadecylbenzenesulfonate, potassium octadecylbenzenesulfonate, lithium behenylbenzenesulfonate, sodium behenylbenzenesulfonate, potassium behenylbenzenesulfonate, lithium dibutylnaphthalenesulfonate, sodium dibutylnaphthalenesulfonate, and potassium dibutylnaphthalenesulfonate.

Specific examples of the alkali metal salt of a sulfonated aliphatic ester having 6 to 22 carbon atoms in the alkyl group include sodium dioctylsulfosuccinate, lithium didodecylsulfosuccinate, lithium dieicosylsulfosuccinate, sodium dodecylsulfoacetate, and potassium nonylphenoxy polyethylene glycol (the number of repetitions of oxyethylene units is 1 to 10) sulfoacetate.

Although the organic sulfonic acid salts have been described above, among these, from the viewpoint of further improving the above-mentioned effects, an alkali metal salt of an alkylsulfonic acid having 6 to 22 carbon atoms in the alkyl group is preferred, and sodium hexylsulfonate, sodium octylsulfonate, sodium nonylsulfonate, sodium decylsulfonate, sodium undecylsulfonate, sodium dodecylsulfonate, sodium tridecylsulfonate, sodium tetradecylsulfonate, sodium pentadecylsulfonate, sodium hexadecylsulfonate, sodium heptadecylsulfonate, sodium octadecylsulfonate, or sodium behenylsulfonate is more preferred.

### (Second Embodiment)

Next, a second embodiment that embodies a polyolefin resin composition (hereinafter referred to as resin composition) according to the present invention will be described. The resin composition of the present embodiment is composed of the modifying agent of the first embodiment described above and a polyolefin resin. The resin composition of the present embodiment contains the modifying agent of the first embodiment in the resin composition at a ratio of 0.45% to 5.0% by mass. When the total content of the polyolefin resin and the modifying agent of the first embodiment is taken as 100 parts by mass (100% by mass), it is preferable that the content of the polyolefin resin is 99.55% to 95.0% by mass (% by mass) and the content of the modifying agent of the first embodiment is 0.45% to 5.0% by mass (% by mass). By defining the contents in such ranges, it is possible to further improve the antifogging property and the antistatic property. In addition, the film formation stability when the resin composition is molded into a film can be improved.

Specific examples of the polyolefin resin used in the resin composition of the present embodiment include (1) α-olefin monopolymers, such as polyethylene and polypropylene, obtained by using one selected from α-olefins having 2 to 8 carbon atoms, such as ethylene, propylene, 1-butene, 1-hexene, and 4-methylpentene-1,1-octene, (2) α-olefin copolymers, such as ethylene/propylene copolymers, ethylene/1-butene copolymers, and ethylene/1-hexene copolymers, obtained by using two or more selected from α-olefins having 2 to 8 carbon atoms as described above, (3) copolymers obtained from ethylene and vinyl acetate, (4) ethylene/vinyl alcohol copolymers obtained by saponification of copolymers obtained from ethylene and vinyl acetate, (5) ethylene/acrylic acid copolymers obtained by using ethylene and one or more types selected from acrylic acid, methyl acrylate, and ethyl acrylate, and (6) ethylene/methacrylic acid copolymers obtained by using ethylene and one or more types selected from methacrylic acid and methyl methacrylate. Among these, an α-olefin copolymer of the above (2) is preferable that is a copolymer of ethylene and an α-olefin having 4 to 8 carbon atoms. Those containing 1% to 50% by mass of a unit composed of such α-olefin having 4 to 8 carbon atoms are more preferable. As the α-olefin copolymer, those obtained by a vapor phase method, a solution polymerization method or the like using a known homogeneous catalyst, such as a highly active Ziegler catalyst or a metallocene catalyst, are even more preferable. Those having a density of 0.86 to 0.94 g/cm³ and an MFR of 0.01 to 30 g/10 minutes are particularly preferable. The olefin resin exemplified above may be used alone, or two or more olefin resins may be mixed and used.

The resin composition of the present embodiment may purposively contain other agents. Examples of such other agents include heat stabilizers, antioxidants, neutralizers, lubricants, weather resistant agents, ultraviolet absorbers, and antiblocking agents. The content of these other agents in the resin composition is preferably as small as possible. When an antiblocking agent is contained among these, it is preferable to use, as the antiblocking agent, for example, oxide-based inorganic particles, such as silica, diatomaceous earth, alumina, iron oxide, and ferrite, silicate-based inorganic particles, such as zeolite, talc, wollastonite, mica, and clay, and organic crosslinked particles, such as crosslinked silicone particles, crosslinked polyamide particles, crosslinked polytriazine particles, crosslinked polyacrylic particles, and crosslinked polystyrene particles. These may be used alone or in combinations of two or more. In the case of using an antiblocking agent as the other agent, when the total content of the polyolefin resin and the antiblocking agent is taken as 100 parts by mass (100% by mass), it is preferable to contain the antiblocking agent at a ratio of 0.1 to 30.0 parts by mass (% by mass) with respect to 99.9 to 70.0 parts by mass (% by mass) of the polyolefin resin. By defining the contents in such a range, the action and effect of other agents can be exerted without inhibiting the effect of the present invention.

The resin composition of the present embodiment per se can be prepared by a known method. For example, in method (1), a masterbatch containing a polyolefin resin and a modifying agent of the first embodiment in a high concentration is prepared in advance, and this masterbatch is further mixed with a polyolefin resin to make a predetermined polyolefin resin composition. In method (2), a polyolefin resin and a modifying agent of the first embodiment are fed into a mixer, such as a tumbler blender, a super mixer, or a Henschel mixer, in advance and mixed, and a polyolefin resin composition containing the modifying agent at a predetermined concentration is made by granulating while melt-kneading the mixture with an extruder, such as a single-shaft extruder or multi-shaft extruder. In method (3), a modifying agent of the first embodiment is mixed by side feed or liquid injection into a place where a polyolefin resin is melted by an extruder, such as a single-shaft extruder or a multi-shaft extruder, and a polyolefin resin composition containing the modifying agent at a predetermined concentration is made by granulating while melt-kneading the mixture. In method (4), a combination of (2) and (3) above is used. The production of the masterbatch of (1) above can be performed in the same manner as in (2), (3), and (4) above. Examples of the means for mixing the polyolefin resin and the modifying agent of the first embodiment include mixing with a mixer, such as a tumbler blender, a super mixer, or a Henschel mixer, side feed, and liquid injection. Which method is adopted among these can be determined by the shape of the polyolefin resin, the ester compound, the nonionic surfactant, and the organic sulfonic acid salt used in the first embodiment. In the case of a solid, for example, mixing by a mixer such as a tumbler blender, a super mixer, or a Henschel mixer, or a side feed can be adopted. In the case of liquid, for example, a liquid injection or a mixer such as a super mixer or a Henschel mixer can be adopted. For solids, they can be dissolved or dispersed in liquid form and then mixed as a liquid or liquid object.

### (Third Embodiment)

Next, a third embodiment that embodies a modified polyolefin resin film (hereinafter referred to as film) according to the present invention will be described. The film of the present embodiment is formed from the resin composition of the second embodiment. The film of the present embodiment contains the modifying agent of the first embodiment in the film at a ratio of 0.45% to 5.0% by mass. By defining the content in such a range, it is possible to further improve the antifogging property and the antistatic property. In addition, the film formation stability can be improved.

A known method can be used as the film forming method of the present embodiment. Examples of such a forming method include inflation molding, such as air-cooled inflation molding, air-cooled two-stage inflation molding, and water-cooled inflation molding, and T-die molding using, for example, a straight manifold type T-die, a coat hanger type T-die, or a combination thereof. Either unstretched or stretched forming method may be used for the film of the present embodiment, and examples of such stretching method include a sequential biaxial stretching method, a simultaneous biaxial stretching method, and a tubular biaxial stretching method.

### (Fourth Embodiment)

Finally, a fourth embodiment that embodies a laminated film according to the present invention will be described. The laminated film of the present embodiment is a laminated film having a layer structure of two or more layers, in which at least one of the surface layers is formed from the resin composition of the second embodiment. In the laminated film of the present embodiment, it is preferable that at least one surface layer is composed of a resin layer containing the modifying agent for polyolefin resin of the first embodiment at a ratio of 0.45% to 5.0% by mass. In the laminated film of the present embodiment, when the total content of the polyolefin resin and the modifying agent of the first embodiment in the resin layer constituting the surface layer is taken as 100 parts by mass (% by mass), it is preferable to contain the polyolefin resin at a ratio of 99.55 to 95.0 parts by mass (% by mass) and the modifying agent of the first embodiment at 0.45 to 5.0 parts by mass (% by mass). By defining the contents in such ranges, it is possible to further improve the antifogging property and the antistatic property. In addition, the film formation stability can be improved.

Examples of those constituting other layers that do not use the resin composition of the second embodiment include thermoplastic resins, adhesives, anchor coating agents, adhesive resins, and metals, such as aluminum. Examples of such thermoplastic resins include the above-mentioned polyolefin resins, polyesters, such as polyethylene terephthalate, polyamides, such as nylon 6, polyvinyl alcohol, polystyrene, and acrylic resins, such as polymethyl methacrylate. Such thermoplastic resins can also purposively contain additives. Examples of such additives include heat stabilizers, antioxidants, neutralizers, lubricants, weather resistant agents, ultraviolet absorbers, antiblocking agents, antistatic agents, and antifogging agents.

The laminated film of the present embodiment per se can be produced by a known method. Examples of such a production method include a dry lamination method, a sand lamination method, an extrusion lamination method, and a co-extrusion method. When a laminated film is produced by a dry lamination method, a sand lamination method, or an extrusion lamination method, a known polyurethane-based adhesive, organic titanium-based anchor coating agent, isocyanate-based anchor coating agent, adhesive resin, or the like may be used. In the production by the co-extrusion method, the inflation molding and the T-die molding described above can be used, and either the unstretched forming method or the stretched forming method using the stretching method described above can be used.

According to the modifying agent, resin composition, film, and laminated film of the embodiments, the following effects can be obtained.

As described above, the modifying agent of the present embodiment contains a specific ester compound and a specific nonionic surfactant. Therefore, it is possible to impart the polyolefin resin with excellent long-term antifogging property without adversely affecting the original heat sealability of the polyolefin resin.

More specifically, the modifying agent of the present embodiment can impart the polyolefin resin with excellent antifogging property and antistatic property which have stability over time without adversely affecting the transparency, film formation stability, and heat sealability inherent in the polyolefin resin. In addition, stickiness when molded into a film can be suppressed.

### EXAMPLES

Examples will now be given below to describe the features and effects of the present invention more specifically. In the following description of working examples and comparative examples, parts means parts by mass and % means % by mass.

Experimental Part 1 (preparation of modifying agent for polyolefin resin)

### (Example 1)

The modifying agent for polyolefin resin (K-1) was prepared by uniformly mixing 19.5 parts of a partial ester of propylene glycol with oleic acid (A-1) as an ester compound, 78 parts of a partial ester of glycerin with oleic acid (B-1) as a nonionic surfactant, and 2.5 parts of sodium alkylsulfonate having 13 to 18 carbon atoms in the alkyl group (C-1) as an organic sulfonic acid salt.

### (Examples 2 to 18 and Comparative Examples 1 to 6) (Examples 3 to 7, and 12 to 18 are not according to the invention)

In the same manner as for the modifying agent for polyolefin resin (K-1) in Example 1, the modifying agents for polyolefin resin (K-2) to (K-18) and (k-1) to (k-6) in Examples 2 to 18 and Comparative Examples 1 to 6 were prepared.

Table 1 shows the details of the modifying agents for polyolefin resin (K-1) to (K-18) and (k-1) to (k-6) prepared in Examples 1 to 18 and Comparative Examples 1 to 6. Specifically, Table 1 shows the types of the ester compound (A), the nonionic surfactant (B), and the organic sulfonic acid (C) and the blending ratio in the modifying agent. The mass ratio of the content of the component (A) to the content of the component (B), A/B, and the mass ratio of the sum of the content of the component (A) and the content of the component (B) to the content of the component (C), (A + B)/(C), are also shown.

**Table 1**

| | Type of modifying agent | Ester compound (A) | | Nonionic surfactant (B) | | Organic sulfonic acid salt (C) | | A/B mass ratio | (A+B)/C mass ratio |
|---|---|---|---|---|---|---|---|---|---|
| | | Type of compound | Ratio (% by mass) | Type of compound | Ratio (% by mass) | Type of compound | Ratio (% by mass) | | |
| Example 1 | K-1 | A-1 | 19.5 | B-1 | 78 | C-1 | 2.5 | 20/80 | 97.5/2.5 |
| Example 2 | K-2 | A-1 | 13 | B-1 | 52 | C-1 | 35 | 20/80 | 70/30 |
| Example 3 | K-3 | A-1 | 20 | B-1 | 80 | - | - | 20/80 | 100/0 |
| Example 4 | K-4 | A-1 | 10 | B-1 | 90 | - | - | 10/90 | 100/0 |
| Example 5 | K-5 | A-1 | 30 | B-1 | 70 | - | - | 30/70 | 100/0 |
| Example 6 | K-6 | A-1 | 20 | B-2 | 80 | - | - | 20/80 | 100/0 |
| Example 7 | K-7 | A-1 | 20 | B-3 | 80 | - | - | 20/80 | 100/0 |
| Example 8 | K-8 | A-1 | 11 | B-4 | 44 | C-1 | 45 | 20/80 | 55/45 |
| Example 9 | K-9 | A-2 | 11 | B-3 | 44 | C-1 | 45 | 20/80 | 55/45 |
| Example 10 | K-10 | A-1 | 11 | B-4 | 44 | C-2 | 45 | 20/80 | 55/45 |
| Example 11 | K-11 | A-1 | 11 | B-5 | 44 | C-3 | 45 | 20/80 | 55/45 |
| Example 12 | K-12 | A-1 | 20 | B-4 | 80 | - | - | 20/80 | 100/0 |
| Example 13 | K-13 | A-1 | 20 | B-6 | 80 | - | - | 20/80 | 100/0 |
| Example 14 | K-14 | A-1 | 20 | B-7 | 80 | - | - | 20/80 | 100/0 |
| Example 15 | K-15 | A-2 | 20 | B-1 | 80 | - | - | 20/80 | 100/0 |
| Example 16 | K-16 | A-3 | 20 | B-1 | 80 | - | - | 20/80 | 100/0 |
| Example 17 | K-17 | A-4 | 20 | B-1 | 80 | - | - | 20/80 | 100/0 |
| Example 18 | K-18 | A-5 | 20 | B-1 | 80 | - | - | 20/80 | 100/0 |
| Comparative Example 1 | k-1 | A-1 | 5 | B-1 | 95 | - | - | 5/95 | 100/0 |
| Comparative Example 2 | k-2 | A-1 | 50 | B-1 | 50 | - | - | 50/50 | 100/0 |
| Comparative Example 3 | k-3 | A-1 | 20 | b-1 | 80 | - | - | 20/80 | 100/0 |
| Comparative Example 4 | k-4 | - | - | B-1 | 100 | - | - | 0/100 | 100/0 |
| Comparative Example 5 | k-5 | - | - | b-2 | 100 | - | - | 0/100 | 100/0 |
| Comparative Example 6 | k-6 | - | - | b-3 | 100 | - | - | 0/100 | 100/0 |

In Table 1, the following symbols indicate the following substances.
A-1: Partial ester of propylene glycol with oleic acid (main component is monoester (hereinafter the same)),
A-2: Partial ester of propylene glycol with stearic acid,
A-3: Partial ester of propylene glycol with lauric acid,
A-4: Partial ester of trimethylene glycol with oleic acid,
A-5: Partial ester of 1,3-butylene glycol with oleic acid,
B-1: Partial ester of glycerin with oleic acid,
B-2: Partial ester of sorbitan with oleic acid,
B-3: Partial ester of diglycerin with oleic acid,
B-4: Partial ester of diglycerin with stearic acid,
B-5: Partial ester of glycerin with stearic acid,
B-6: Partial ester of diglycerin with lauric acid,
B-7: Partial ester of tetraglycerin with oleic acid,
b-1: Partial ester of decaglycerin with oleic acid,
b-2: Partial ester of glycerin with stearic acid/lauryldiethanolamine = 80/20 parts by mass,
b-3: Partial ester of glycerin with stearic acid/stearyldiethanolamine = 67/33 parts by mass,
C-1: Sodium alkylsulfonate having 13 to 18 carbon atoms,
C-2: Sodium dodecylbenzene sulfonate, and
C-3: Sodium alkylbenzene sulfonate having 10 to 18 carbon atoms.

### Experimental Part 2 (production of modified polyolefin resin film)

### (Example 19)

A masterbatch in which the concentration of the modifying agent of the present invention was 10% was produced by uniformly mixing 90 parts of ethylene/1-butene copolymer (density 0.920 g/cm³, MFR 2.1 g/10 minutes, ethylene copolymer ratio 95%) (D-1), as an olefin resin, and 10 parts of modifying agent for polyolefin resin (K-1). Then, 10 parts of this masterbatch and 90 parts of the ethylene/1-butene copolymer (D-1) were mixed by a tumbler blender. The obtained mixture was molded by the T-die method while cooling to 30°C to produce a single-layer film having a thickness of 40 µm.

### (Examples 20 to 36, Comparative Examples 7 to 12, and Reference Example 1)

Masterbatches having a concentration of 10% of the modifying agents for polyolefin resin (K-2) to (K-18) and (k-1) to (k-6) were produced in the same manner as in Example 19, and then mixed with the polyolefin resins (D-1) to (D-6) to produce single-layer films by the T-die method. The types and contents of the modifying agent and the types and contents of the polyolefin resin in the film are shown in Table 2.

Table 2 shows the details of the single-layer films produced in Examples 19 to 36, Comparative Examples 7 to 12, and Reference Example 1.(Examples 21 to 25, and 30 to 36 are not according to the invention)

**Table 2**

| | Resin used in masterbatch | Film | | | |
|---|---|---|---|---|---|
| | | Resin | | Modifying agent | |
| | | Type | Composition (% by mass) | Type | Composition (% by mass) |
| Example 19 | D-1 | D-1 | 99 | K-1 | 1 |
| Example 20 | D-2 | D-2 | 99 | K-2 | 1 |
| Example 21 | D-3 | D-3 | 99 | K-3 | 1 |
| Example 22 | D-4 | D-4 | 99 | K-4 | 1 |
| Example 23 | D-1 | D-1 | 99 | K-5 | 1 |
| Example 24 | D-5 | D-5 | 99.55 | K-6 | 0.45 |
| Example 25 | D-6 | D-6 | 95.5 | K-7 | 4.5 |
| Example 26 | D-1 | D-1 | 99 | K-8 | 1 |
| Example 27 | D-1 | D-1 | 99 | K-9 | 1 |
| Example 28 | D-1 | D-1 | 99 | K-10 | 1 |
| Example 29 | D-1 | D-1 | 99 | K-11 | 1 |
| Example 30 | D-1 | D-1 | 99 | K-12 | 1 |
| Example 31 | D-1 | D-1 | 99 | K-13 | 1 |
| Example 32 | D-1 | D-1 | 99 | K-14 | 1 |
| Example 33 | D-1 | D-1 | 99 | K-15 | 1 |
| Example 34 | D-1 | D-1 | 99 | K-16 | 1 |
| Example 35 | D-1 | D-1 | 99 | K-17 | 1 |
| Example 36 | D-1 | D-1 | 99 | K-18 | 1 |
| Comparative Example 7 | D-1 | D-1 | 99 | k-1 | 1 |
| Comparative Example 8 | D-1 | D-1 | 99 | k-2 | 1 |
| Comparative Example 9 | D-1 | D-1 | 99 | k-3 | 1 |
| Comparative Example 10 | D-1 | D-1 | 99 | k-4 | 1 |
| Reference Example 1 | D-1 | D-1 | 90 | K-3 | 10 |
| Comparative Example 11 | D-1 | D-1 | 99 | k-5 | 1 |
| Comparative Example 12 | D-1 | D-1 | 99 | k-6 | 1 |

In Table 2, the following symbols indicate the following substances.
D-1: Ethylene/1-butene copolymer (density 0.920 g/cm³, MFR 2.1 g/10 minutes, ethylene copolymer ratio 95%),
D-2: Ethylene/1-hexene copolymer (density 0.930 g/cm³, MFR 1.0 g/10 minutes, ethylene copolymer ratio 96%),
D-3: Ethylene/1-octene copolymer (density 0.931 g/cm³, MFR 2.8 g/10 minutes, ethylene copolymer ratio 96%),
D-4: Polyethylene (density 0.927 g/cm³, MFR 4.0 g/10 minutes)
D-5: Ethylene/vinyl acetate copolymer (density 0.930 g/cm³, MFR 1.5 g/10 minutes, ethylene copolymer ratio 90%), and
D-6: Ethylene/propylene copolymer (density 0.900 g/cm³, MFR 8.0 g/10 minutes, ethylene copolymer ratio 3.5%).

### Experimental Part 3 (evaluation of modified polyolefin resin film)

### Evaluation of antifogging property

The film produced in Experimental Part 2 was humidity-controlled under the conditions of 20°C and a relative humidity of 65% for 24 hours, then adhered to a beaker containing water at 20°C and left in an atmosphere of 5°C for 0.5 hours. Then, the degree of adhesion of water droplets was observed, and the initial antifogging property was evaluated according to the following criteria. Furthermore, the antifogging property of the films was evaluated in the same manner after being humidity-controlled under the conditions of 40°C and a relative humidity of 50% for 4 weeks, which was used as the evaluation of antifogging property over time.

### Evaluation criteria for antifogging property

∘∘: No adhesion of water droplets, transparent, and remarkably excellent antifogging property.
∘: Large water droplets adhered, but transparent and excellent antifogging property.
×: Many small water droplets adhered, opaque, and poor antifogging property.

### Evaluation of antistatic property

The film produced in Experimental Part 2 was humidity-controlled under the conditions of 20°C and a relative humidity of 65% for 24 hours, then the surface specific resistance value (Ω/□) was measured under the same conditions by using a surface resistance value measuring device (manufactured by HIOKI E.E. CORPORATION, trade name: Super Megohmmeter SM-8220), and the initial antistatic property was evaluated according to the following criteria. Furthermore, the antistatic property of the films was evaluated in the same manner after being stored under the conditions of 40°C and a relative humidity of 50% for 4 weeks, which was used as the evaluation of antistatic property over time.

### Evaluation criteria for antistatic property

∘∘: Surface specific resistance value is less than 1 × 10¹² Ω/□.
∘: Surface specific resistance value is 1 × 10¹² Ω/□ or more and less than 1 × 10¹³ Ω/□.
×: Surface specific resistance value is 1 × 10¹³ Ω/□ or more.

### Evaluation of heat sealability

The film produced in Experimental Part 2 was humidity-controlled under the conditions of 20°C and a relative humidity of 65% for 24 hours, and then the modifying agent-added layers were heat-sealed under the conditions of 116°C, 0.2 MPa, for 3 seconds. Then, the film was cut into a width of 15 mm, and the heat seal strength when pulled at a speed of 100 mm/minute was measured using an autograph, and the initial heat sealability was evaluated according to the following criteria. Furthermore, the heat sealability of the film was evaluated in the same manner after being stored under the conditions of 40°C and a relative humidity of 50% for 4 weeks, which was used as the evaluation of heat sealability over time.

### Evaluation criteria for heat sealability

∘∘: Heat seal strength is 10 N/15 mm or more.
∘: Heat seal strength is 5 N/15 mm or more and less than 10 N /15 mm.
×: Heat seal strength is less than 5 N/15 mm.

### Evaluation of degree of stickiness of film surface

The film produced in Experimental Part 2 was humidity-controlled under the conditions of 20°C and a relative humidity of 65% for 24 hours, then the initial degree of stickiness of the film surface was evaluated by a sensory test with touch and visual inspection. Furthermore, the degree of stickiness of the film was evaluated in the same manner after being humidity-controlled under the conditions of 40°C and a relative humidity of 50% for 4 weeks, which was used as the evaluation of degree of stickiness over time.

### Evaluation criteria for degree of stickiness of film surface

∘∘: No stickiness is felt.
∘: Slightly sticky, but no problem with the appearance of the film.
×: Sticky, with an oil film on the film.

### Evaluation of transparency

The film produced in Experimental Part 2 was humidity-controlled under the conditions of 20°C **and** a relative humidity of 65% for 24 hours, then the haze was measured using a haze meter (manufactured by NIPPON DENSHOKU INDUSTRIES CO., LTD., trade name: NDH-5000), and the initial transparency was evaluated according to the following criteria. Furthermore, the transparency of the film was evaluated in the same manner after being humidity-controlled under the conditions of 40°C and a relative humidity of 50% for 4 weeks, which was used as the evaluation of transparency over time.

### Evaluation criteria for transparency

∘∘: Less than 5% (excellent transparency).
∘: 5% or more and less than 10% (good transparency).
×: 10% or more (poor transparency).

### Evaluation of film formation stability

When the film was formed in Experimental Part 2, the film formation stability of the film was visually observed and evaluated according to the following criteria.

### Evaluation criteria for film formation stability

∘: No extrusion fluctuation was observed in the film formed, and the film having stable film thickness was obtained.
×: Extrusion fluctuation was observed in the film formed, and the film having stable film thickness was not obtained.

Table 3 shows the evaluation results of the single-layer films produced in Examples 19 to 36, Comparative Examples 7 to 12, and Reference Example 1 for antifogging property, antistatic property, heat sealability, degree of stickiness, transparency, and film formation stability.

**Table 3**

| | Evaluation results | | | | | | | | | | |
|---|---|---|---|---|---|---|---|---|---|---|---|
| | Antifogging property | | Antistatic property | | Heat sealability | | Degree of stickiness | | Transparency | | Film formation stability |
| | Initial | Over time | Initial | Over time | Initial | Over time | Initial | Over time | Initial | Over time | |
| Example 19 | ○○ | ○○ | ○○ | ○○ | ○○ | ○○ | ○○ | ○○ | ○○ | ○○ | ○ |
| Example 20 | ○○ | ○○ | ○○ | ○○ | ○○ | ○○ | ○○ | ○○ | ○○ | ○○ | ○ |
| Example 21 | ○○ | ○○ | ○○ | ○○ | ○○ | ○○ | ○○ | ○ | ○○ | ○○ | ○ |
| Example 22 | ○○ | ○○ | ○○ | ○○ | ○○ | ○○ | ○○ | ○ | ○○ | ○○ | ○ |
| Example 23 | ○ | ○○ | ○○ | ○○ | ○○ | ○○ | ○○ | ○○ | ○○ | ○○ | ○ |
| Example 24 | ○ | ○○ | ○○ | ○○ | ○○ | ○○ | ○○ | ○○ | ○○ | ○○ | ○ |
| Example 25 | ○○ | ○○ | ○○ | ○○ | ○○ | ○○ | ○○ | ○ | ○ | ○ | ○ |
| Example 26 | ○ | ○ | ○○ | ○○ | ○○ | ○○ | ○○ | ○○ | ○○ | ○○ | ○ |
| Example 27 | ○ | ○ | ○○ | ○○ | ○○ | ○○ | ○○ | ○○ | ○○ | ○○ | ○ |
| Example 28 | ○ | ○ | ○○ | ○○ | ○○ | ○○ | ○○ | ○○ | ○○ | ○○ | ○ |
| Example 29 | ○ | ○ | ○○ | ○○ | ○○ | ○○ | ○○ | ○○ | ○○ | ○○ | ○ |
| Example 30 | ○ | ○ | ○○ | ○○ | ○○ | ○○ | ○○ | ○ | ○○ | ○○ | ○ |
| Example 31 | ○○ | ○○ | ○○ | ○○ | ○ | ○ | ○○ | ○ | ○○ | ○○ | ○ |
| Example 32 | ○○ | ○○ | ○○ | ○○ | ○ | ○ | ○○ | ○ | ○○ | ○○ | ○ |
| Example 33 | ○ | ○ | ○○ | ○○ | ○○ | ○○ | ○○ | ○ | ○○ | ○○ | ○ |
| Example 34 | ○○ | ○○ | ○○ | ○○ | ○ | ○ | ○○ | ○ | ○○ | ○○ | ○ |
| Example 35 | ○ | ○○ | ○○ | ○○ | ○ | ○ | ○○ | ○ | ○○ | ○○ | ○ |
| Example 36 | ○ | ○○ | ○○ | ○○ | ○ | ○ | ○○ | ○ | ○○ | ○○ | ○ |
| Comparative Example 7 | ○○ | ○○ | ○○ | ○○ | × | × | ○ | ○ | ○○ | ○○ | ○ |
| Comparative Example 8 | × | × | × | × | ○○ | ○○ | ○ | ○ | ○○ | ○○ | ○ |
| Comparative Example 9 | × | ○ | ○ | ○ | ○○ | ○○ | ○○ | ○ | ○○ | ○○ | ○ |
| Comparative Example 10 | ○○ | ○○ | ○○ | ○○ | × | × | ○ | ○ | ○○ | ○○ | ○ |
| Reference Example 1 | - | - | - | - | - | - | - | - | - | - | × |
| Comparative Example 11 | ○ | ○ | ○○ | ○○ | × | × | × | × | ○ | × | ○ |
| Comparative Example 12 | ○ | ○ | ○○ | ○○ | × | × | × | × | ○ | × | ○ |

### Experimental Part 4 (production of laminated film)

### (Example 37)

After producing a masterbatch having a concentration of 10% of the modifying agent for polyolefin resin (K-1) in the same manner as in Experimental Part 2, 10 parts of this masterbatch and 90 parts of the ethylene/1-butene copolymer (D-1) were mixed by a tumbler blender. The obtained mixture was used for the outer layer (first layer) on one side, and the ethylene/1-butene copolymer (D-1) was used for the intermediate layer (second layer) and the other outer layer (third layer). They were extruded together while cooling to 30°C by the T-die method to produce a three-layer laminated film having a thickness of 40 µm. The ratio of the thickness of each layer is first layer/second layer/third layer = 1/2/1.

### (Examples 38 to 54, Comparative Examples 13 to 18, and Reference Example 2)

Masterbatches having a concentration of 10% of modifying agents for polyolefin resin (K-2) to (K-15) and (k-1) to (k-6) were produced in the same manner as in Experimental Part 2, and then mixed with polyolefin resins (D-1) to (D-6) in the same manner as in Example 37 to produce a three-layer laminated film by the T-die method.

Table 4 shows the laminated films produced in Examples 37 to 54, Comparative Examples 13 to 18, and Reference Example 2. (Examples 40 to 44, 47, and 51 to 54 are not according to the invention). In Table 4, the type and content of the modifying agent and the type and content of the polyolefin resin in each layer of the laminated film are shown.

**Table 4**

| | Resin used in masterbatch | Laminated film | | | | | |
|---|---|---|---|---|---|---|---|
| | | Layer structure | | | | | |
| | | First layer (film thickness: 10 µm) | | | | Second layer (film thickness: 20 µm) | Third layer (film thickness: 10 µm) |
| | | Resin | | Modifying agent | | Type of resin | Type of resin |
| | | Type | Composition (% by mass) | Type | Composition (% by mass) | | |
| Example 37 | D-1 | D-1 | 99 | K-1 | 1 | D-1 | D-1 |
| Example 38 | D-2 | D-2 | 99 | K-1 | 1 | D-2 | D-2 |
| Example 39 | D-3 | D-3 | 99 | K-2 | 1 | D-3 | D-3 |
| Example 40 | D-4 | D-4 | 99 | K-3 | 1 | D-4 | D-4 |
| Example 41 | D-1 | D-1 | 99 | K-4 | 1 | D-2 | D-2 |
| Example 42 | D-5 | D-5 | 99.55 | K-5 | 0.45 | D-5 | D-5 |
| Example 43 | D-6 | D-6 | 95.5 | K-6 | 4.5 | D-6 | D-6 |
| Example 44 | D-1 | D-1 | 99 | K-7 | 1 | D-1 | D-1 |
| Example 45 | D-1 | D-1 | 99 | K-8 | 1 | D-1 | D-1 |
| Example 46 | D-1 | D-1 | 99 | K-2 | 1 | D-1 | D-1 |
| Example 47 | D-1 | D-1 | 99 | K-3 | 1 | D-1 | D-1 |
| Example 48 | D-1 | D-1 | 99 | K-9 | 1 | D-1 | D-1 |
| Example 49 | D-1 | D-1 | 99 | K-10 | 1 | D-1 | D-1 |
| Example 50 | D-1 | D-1 | 99 | K-11 | 1 | D-1 | D-1 |
| Example 51 | D-1 | D-1 | 99 | K-12 | 1 | D-1 | D-1 |
| Example 52 | D-1 | D-1 | 99 | K-13 | 1 | D-1 | D-1 |
| Example 53 | D-1 | D-1 | 99 | K-14 | 1 | D-1 | D-1 |
| Example 54 | D-1 | D-1 | 99 | K-15 | 1 | D-1 | D-1 |
| Comparative Example 13 | D-1 | D-1 | 99 | k-1 | 1 | D-1 | D-1 |
| Comparative Example 14 | D-1 | D-1 | 99 | k-2 | 1 | D-1 | D-1 |
| Comparative Example 15 | D-1 | D-1 | 99 | k-3 | 1 | D-1 | D-1 |
| Comparative Example 16 | D-1 | D-1 | 99 | k-4 | 1 | D-1 | D-1 |
| Reference Example 2 | D-1 | D-1 | 90 | K-1 | 10 | D-1 | D-1 |
| Comparative Example 17 | D-1 | D-1 | 99 | k-5 | 1 | D-1 | D-1 |
| Comparative Example 18 | D-1 | D-1 | 99 | k-6 | 1 | D-1 | D-1 |

### Experimental Part 5 (evaluation of laminated film)

The film produced in Experimental Part 2 was evaluated by the same method for the same items as in Experimental Part 3. However, only the evaluation criteria for transparency differed, and the evaluation was made according to the following criteria.

### Evaluation criteria for transparency in laminated film

∘∘: Less than 4% (excellent transparency).
∘: 4% or more and less than 8% (good transparency).
×: 8% or more (poor transparency).

Table 5 shows the evaluation results of the laminated films produced in Examples 37 to 54, Comparative Examples 13 to 18, and Reference Example 2 for antifogging property, antistatic property, heat sealability, degree of stickiness, transparency, and film formation stability.

**Table 5**

| | Evaluation results | | | | | | | | | | |
|---|---|---|---|---|---|---|---|---|---|---|---|
| | Antifogging property | | Antistatic property | | Heat sealability | | Degree of stickiness | | Transparency | | Film formation stability |
| | Initial | Over time | Initial | Over time | Initial | Over time | Initial | Over time | Initial | Over time | |
| Example 37 | ○○ | ○○ | ○○ | ○○ | ○○ | ○○ | ○○ | ○○ | ○○ | ○○ | ○ |
| Example 38 | ○○ | ○○ | ○○ | ○○ | ○○ | ○○ | ○○ | ○○ | ○○ | ○○ | ○ |
| Example 39 | ○○ | ○○ | ○○ | ○○ | ○○ | ○○ | ○○ | ○ | ○○ | ○○ | ○ |
| Example 40 | ○○ | ○○ | ○○ | ○○ | ○○ | ○○ | ○○ | ○ | ○○ | ○○ | ○ |
| Example 41 | ○ | ○○ | ○○ | ○○ | ○○ | ○○ | ○○ | ○○ | ○○ | ○○ | ○ |
| Example 42 | ○ | ○○ | ○ | ○○ | ○○ | ○○ | ○○ | ○○ | ○○ | ○○ | ○ |
| Example 43 | ○○ | ○○ | ○○ | ○○ | ○○ | ○ | ○○ | ○ | ○ | ○ | ○ |
| Example 44 | ○ | ○ | ○○ | ○○ | ○○ | ○○ | ○○ | ○○ | ○○ | ○○ | ○ |
| Example 45 | ○ | ○ | ○○ | ○○ | ○○ | ○○ | ○○ | ○○ | ○○ | ○○ | ○ |
| Example 46 | ○ | ○ | ○○ | ○○ | ○○ | ○○ | ○○ | ○○ | ○○ | ○○ | ○ |
| Example 47 | ○ | ○ | ○○ | ○○ | ○○ | ○○ | ○○ | ○○ | ○○ | ○○ | ○ |
| Example 48 | ○ | ○ | ○○ | ○○ | ○○ | ○○ | ○○ | ○ | ○○ | ○○ | ○ |
| Example 49 | ○○ | ○○ | ○○ | ○○ | ○ | ○ | ○○ | ○ | ○○ | ○○ | ○ |
| Example 50 | ○○ | ○○ | ○○ | ○○ | ○ | ○ | ○○ | ○ | ○○ | ○○ | ○ |
| Example 51 | ○ | ○ | ○○ | ○○ | ○○ | ○○ | ○○ | ○ | ○○ | ○○ | ○ |
| Example 52 | ○○ | ○○ | ○○ | ○○ | ○ | ○ | ○○ | ○ | ○○ | ○○ | ○ |
| Example 53 | ○ | ○○ | ○○ | ○○ | ○ | ○ | ○○ | ○ | ○○ | ○○ | ○ |
| Example 54 | ○ | ○○ | ○○ | ○○ | ○ | ○ | ○○ | ○ | ○○ | ○○ | ○ |
| Comparative Example 13 | ○○ | ○○ | ○○ | ○○ | × | × | ○ | ○ | ○○ | ○○ | ○ |
| Comparative Example 14 | × | × | × | × | ○○ | ○○ | ○ | ○ | ○○ | ○○ | ○ |
| Comparative Example 15 | × | ○ | × | ○ | ○○ | ○○ | ○○ | ○ | ○○ | ○○ | ○ |
| Comparative Example 16 | ○○ | ○○ | ○○ | ○○ | × | × | ○ | ○ | ○○ | ○○ | ○ |
| Reference Example 2 | - | - | - | - | - | - | - | - | - | - | × |
| Comparative Example 17 | ○ | ○ | ○○ | ○○ | × | × | × | × | ○ | × | ○ |
| Comparative Example 18 | ○ | ○ | ○○ | ○○ | × | × | × | × | ○ | × | ○ |

The modified polyolefin resin films of Comparative Examples 7 to 18 shown in Tables 3 and 5 have problems in any one or more of antifogging property, antistatic property, heat sealability, degree of stickiness, and transparency. As for Reference Examples 1 and 2, there was a problem in film formation stability, and a film for use in other performance evaluations could not be produced.

The modified polyolefin resin films of Examples 19 to 54 shown in Tables 3 and 5 can impart excellent long-term antifogging property and antistatic property without adversely affecting the original transparency, film formation stability, and heat sealability of the polyolefin resin, and without causing stickiness of the film.

## Claims

1. A modifying agent for polyolefin resin, comprising an ester compound, a nonionic surfactant, and an organic sulfonic acid salt, wherein
the mass ratio of the content of the ester compound to the content of the nonionic surfactant is (ester compound)/(nonionic surfactant) = 10/90 to 30/70,
the ester compound is at least one selected from the group consisting of partial esters of a dihydric alcohol having 2 to 4 carbon atoms with an aliphatic monocarboxylic acid having 8 to 22 carbon atoms,
the nonionic surfactant is at least one selected from the group consisting of a partial ester of a tri- to hexahydric alcohol with an aliphatic monocarboxylic acid having 8 to 22 carbon atoms, an ester compound represented by Chemical Formula 1 below, and an ether compound represented by Chemical Formula 2 below, the organic sulfonic acid salt is at least one selected from the group consisting of an alkali metal salt of an alkylsulfonic acid having 6 to 22 carbon atoms in the alkyl group, an alkali metal salt of an alkylarylsulfonic acid having 6 to 22 carbon atoms in the alkyl group, and an alkali metal salt of a sulfonated aliphatic ester having 6 to 22 carbon atoms in the alkyl group, and
the mass ratio of the sum of the content of the ester compound and the content of the nonionic surfactant to the content of the organic sulfonic acid salt is (ester compound + nonionic surfactant)/organic sulfonic acid salt = 99/1 to 50/50.
[Chemical Formula 1] R¹-CO-O-R²-OH
(In Chemical Formula 1,
R¹ is a hydrocarbon group having 5 to 21 carbon atoms, and
R² is a residue obtained by removing all hydroxyl groups from a (poly) oxyalkylene glycol having 2 to 200 carbon atoms and having a (poly) oxyalkylene group composed of oxyalkylene units having 2 to 4 carbon atoms in the molecule.)
[Chemical Formula 2] R³-O-R⁴-OH
(In Chemical Formula 2,
R³ is a hydrocarbon group having 6 to 22 carbon atoms, and
R⁴ is a residue obtained by removing all hydroxyl groups from a (poly) oxyalkylene glycol having 2 to 200 carbon atoms and having a (poly) oxyalkylene group composed of oxyalkylene units having 2 to 4 carbon atoms in the molecule.)

2. The modifying agent for polyolefin resin according to claim 1, wherein the ester compound is at least one selected from the group consisting of monoesters of propylene glycol with an aliphatic monocarboxylic acid having 12 to 18 carbon atoms.

3. The modifying agent for polyolefin resin according to claim 1 or 2, wherein the nonionic surfactant is at least one selected from the group consisting of partial esters of a polyhydric alcohol represented by Chemical Formula 3 below or sorbitan with an aliphatic monocarboxylic acid having 12 to 18 carbon atoms.
[Chemical Formula 3] HO-(CH₂-CHOH-CH₂-O-)ₙ-H
(In Chemical Formula 3, n is an integer of 1 to 4.)

4. The modifying agent for polyolefin resin according to any one of claims 1 to 3, wherein the ester compound is a monoester of propylene glycol with oleic acid.

5. The modifying agent for polyolefin resin according to any one of claims 1 to 3, wherein
the ester compound is at least one selected from the group consisting of monoesters of propylene glycol with an aliphatic monocarboxylic acid having 12 to 18 carbon atoms, and
the nonionic surfactant is a partial ester of polyhydric alcohol represented by Chemical Formula 3 with oleic acid.

6. The modifying agent for polyolefin resin according to any one of claims 1 to 5, wherein
the ester compound is a monoester of propylene glycol with oleic acid, and
the nonionic surfactant is a partial ester of a polyhydric alcohol represented by Chemical Formula 3 with oleic acid.

7. The modifying agent for polyolefin resin according to any one of claims 1 to 6, wherein the organic sulfonic acid salt is at least one selected from the group consisting of alkali metal salts of an alkylsulfonic acid having 6 to 22 carbon atoms in the alkyl group.

8. A polyolefin resin composition comprising the modifying agent for polyolefin resin according to any one of claims 1 to 7 and a polyolefin resin, wherein the modifying agent for polyolefin resin is contained in the polyolefin resin at a ratio of 0.45% to 5.0% by mass.

9. A modified polyolefin resin film formed from the polyolefin resin composition according to claim 8.

10. A modified polyolefin resin film comprising the modifying agent for polyolefin resin according to any one of claims 1 to 7 at a ratio of 0.45% to 5.0% by mass.

11. A laminated film in which at least one surface layer is composed of a resin layer made of the polyolefin resin composition according to claim 8.

12. A laminated film in which at least one surface layer is composed of a resin layer containing the modifying agent for polyolefin resin according to any one of claims 1 to 7 at a ratio of 0.45% to 5.0% by mass.

## Patentansprüche

1. Modifizierungsmittel für Polyolefinharz, umfassend eine Esterverbindung, ein nichtionisches Tensid und ein organisches Sulfonsäuresalz, wobei
das Massenverhältnis des Gehalts der Esterverbindung zu dem Gehalt des nichtionischen Tensids (Esterverbindung)/(nichtionisches Tensid) = 10/90 bis 30/70 ist,
die Esterverbindung mindestens eine ist, ausgewählt aus der Gruppe, bestehend aus Partialestern eines zweiwertigen Alkohols mit 2 bis 4 Kohlenstoffatomen mit einer aliphatischen Monocarbonsäure mit 8 bis 22 Kohlenstoffatomen,
das nichtionische Tensid mindestens eines ist, ausgewählt aus der Gruppe, bestehend aus einem Partialester eines drei- bis sechswertigen Alkohols mit einer aliphatischen Monocarbonsäure mit 8 bis 22 Kohlenstoffatomen, eine Esterverbindung, dargestellt durch die nachstehende chemische Formel 1, und eine Etherverbindung, dargestellt durch die nachstehende chemische Formel 2, das organische Sulfonsäuresalz mindestens eines ist, ausgewählt aus der Gruppe, bestehend aus einem Alkalimetallsalz einer Alkylsulfonsäure mit 6 bis 22 Kohlenstoffatomen in der Alkylgruppe, einem Alkalimetallsalz einer Alkylarylsulfonsäure mit 6 bis 22 Kohlenstoffatomen in der Alkylgruppe und einem Alkalimetallsalz eines sulfonierten aliphatischen Esters mit 6 bis 22 Kohlenstoffatomen in der Alkylgruppe, und
das Massenverhältnis der Summe des Gehalts der Esterverbindung und des Gehalts des nichtionischen Tensids zu dem Gehalt des organischen Sulfonsäuresalzes (Esterverbindung + nichtionisches Tensid)/organisches Sulfonsäuresalz = 99/1 bis 50/50 ist.
[Chemische Formel 1] R¹-CO-O-R²-OH
(in der chemischen Formel 1 ist
R¹ eine Kohlenwasserstoffgruppe mit 5 bis 21 Kohlenstoffatomen, und
R² ist ein Rest, erhalten durch Entfernen aller Hydroxylgruppen von einem (Poly)oxyalkylenglykol mit 2 bis 200 Kohlenstoffatomen und mit einer (Poly)oxyalkylengruppe, zusammengesetzt aus Oxyalkyleneinheiten mit 2 bis 4 Kohlenstoffatomen im Molekül.)
[Chemische Formel 2] R³-O-R⁴-OH
(in der chemischen Formel 2 ist
R³ eine Kohlenwasserstoffgruppe mit 6 bis 22 Kohlenstoffatomen, und
R⁴ ist ein Rest, erhalten durch Entfernen aller Hydroxylgruppen von einem (Poly)oxyalkylenglykol mit 2 bis 200 Kohlenstoffatomen und mit einer (Poly)oxyalkylengruppe, zusammengesetzt aus Oxyalkyleneinheiten mit 2 bis 4 Kohlenstoffatomen im Molekül.)

2. Modifizierungsmittel für Polyolefinharz nach Anspruch 1, wobei die Esterverbindung mindestens eine ist, ausgewählt aus der Gruppe, bestehend aus Monoestern von Propylenglykol mit einer aliphatischen Monocarbonsäure mit 12 bis 18 Kohlenstoffatomen.

3. Modifizierungsmittel für Polyolefinharz nach Anspruch 1 oder 2, wobei das nichtionische Tensid mindestens eines ist, ausgewählt aus der Gruppe, bestehend aus Partialestern eines mehrwertigen Alkohols, dargestellt durch die nachstehende chemische Formel 3, oder Sorbitan mit einer aliphatischen Monocarbonsäure mit 12 bis 18 Kohlenstoffatomen.
[Chemische Formel 3] HO-(CH₂-CHOH-CH₂-O-)ₙ-H
(in der chemischen Formel 3 ist n eine ganze Zahl von 1 bis 4.)

4. Modifizierungsmittel für Polyolefinharz nach einem der Ansprüche 1 bis 3, wobei die Esterverbindung ein Monoester von Propylenglykol mit Ölsäure ist.

5. Modifizierungsmittel für Polyolefinharz nach einem der Ansprüche 1 bis 3, wobei
die Esterverbindung mindestens eine ist, ausgewählt aus der Gruppe, bestehend aus Monoestern von Propylenglykol mit einer aliphatischen Monocarbonsäure mit 12 bis 18 Kohlenstoffatomen, und
das nichtionische Tensid ein Partialester eines mehrwertigen Alkohols, dargestellt durch die chemische Formel 3, mit Ölsäure ist.

6. Modifizierungsmittel für Polyolefinharz nach einem der Ansprüche 1 bis 5, wobei
die Esterverbindung ein Monoester von Propylenglykol mit Ölsäure ist, und
das nichtionische Tensid ein Partialester eines mehrwertigen Alkohols, dargestellt durch die chemische Formel 3, mit Ölsäure ist.

7. Modifizierungsmittel für Polyolefinharz nach einem der Ansprüche 1 bis 6, wobei das organische Sulfonsäuresalz mindestens eines ist, ausgewählt aus der Gruppe, bestehend aus Alkalimetallsalzen einer Alkylsulfonsäure mit 6 bis 22 Kohlenstoffatomen in der Alkylgruppe.

8. Polyolefinharzzusammensetzung, umfassend das Modifizierungsmittel für Polyolefinharz nach einem der Ansprüche 1 bis 7 und ein Polyolefinharz, wobei das Modifizierungsmittel für Polyolefinharz in dem Polyolefinharz in einem Verhältnis von 0,45 Massen-% bis 5,0 Massen-% enthalten ist.

9. Modifizierte Polyolefinharzfolie, gebildet aus der Polyolefinharzzusammensetzung nach Anspruch 8.

10. Modifizierte Polyolefinharzfolie, umfassend das Modifizierungsmittel für Polyolefinharz nach einem der Ansprüche 1 bis 7 in einem Verhältnis von 0,45 Massen-% bis 5,0 Massen-%.

11. Laminierte Folie, in der mindestens eine Oberflächenschicht aus einer Harzschicht besteht, die aus der Polyolefinharzzusammensetzung nach Anspruch 8 hergestellt ist.

12. Laminierte Folie, in der mindestens eine Oberflächenschicht aus einer Harzschicht besteht, die das Modifizierungsmittel für Polyolefinharz nach einem der Ansprüche 1 bis 7 in einem Verhältnis von 0,45 Massen-% bis 5,0 Massen-% enthält.

## Revendications

1. Agent de modification pour résine de polyoléfine, comprenant un composé ester, un tensioactif non ionique, et un sel d'acide sulfonique organique, où
le rapport en masse de la teneur du composé ester à la teneur du tensioactif non ionique est (composé ester)/(tensioactif non ionique) = 10/90 à 30/70,
le composé ester est au moins un choisi dans le groupe constitué d'esters partiels d'un alcool dihydrique ayant 2 à 4 atomes de carbone avec un acide monocarboxylique aliphatique ayant 8 à 22 atomes de carbone,
le tensioactif non ionique est au moins un choisi dans le groupe constitué d'un ester partiel d'un alcool tri- à hexahydrique avec un acide monocarboxylique aliphatique ayant 8 à 22 atomes de carbone, un composé ester représenté par la formule chimique 1 ci-dessous, et un composé éther représenté par la formule chimique 2 ci-dessous, le sel d'acide sulfonique organique est au moins un choisi dans le groupe constitué d'un sel de métal alcalin d'un acide alkylsulfonique ayant 6 à 22 atomes de carbone dans le groupe alkyle, d'un sel de métal alcalin d'un acide alkylarylsulfonique ayant 6 à 22 atomes de carbone dans le groupe alkyle, et d'un sel de métal alcalin d'un ester aliphatique sulfoné ayant 6 à 22 atomes de carbone dans le groupe alkyle, et
le rapport en masse de la somme de la teneur du composé ester et de la teneur du tensioactif non ionique à la teneur du sel d'acide sulfonique organique est (composé ester + tensioactif non ionique)/sel d'acide sulfonique organique = 99/1 à 50/50.
[Formule chimique 1] R¹-CO-O-R²-OH
(dans la formule chimique 1,
R¹ est un groupe hydrocarboné ayant 5 à 21 atomes de carbone, et
R² est un résidu obtenu par élimination de tous les groupes hydroxyle d'un (poly)oxyalkylène glycol ayant 2 à 200 atomes de carbone et ayant un groupe (poly)oxyalkylène composé d'unités oxyalkylène ayant 2 à 4 atomes de carbone dans la molécule.)
[Formule chimique 2] R³-O-R⁴-OH
(dans la formule chimique 2,
R³ est un groupe hydrocarboné ayant 6 à 22 atomes de carbone, et
R⁴ est un résidu obtenu par élimination de tous les groupes hydroxyle d'un (poly)oxyalkylène glycol ayant 2 à 200 atomes de carbone et ayant un groupe (poly)oxyalkylène composé d'unités oxyalkylène ayant 2 à 4 atomes de carbone dans la molécule.)

2. Agent de modification pour résine de polyoléfine selon la revendication 1, où le composé ester est au moins un choisi dans le groupe constitué de monoesters de propylène glycol avec un acide monocarboxylique aliphatique ayant 12 à 18 atomes de carbone.

3. Agent de modification pour résine de polyoléfine selon la revendication 1 ou 2, où le tensioactif non ionique est au moins un choisi dans le groupe constitué d'esters partiels d'un alcool polyhydrique représenté par la formule chimique 3 ci-dessous ou de sorbitan avec un acide monocarboxylique aliphatique ayant 12 à 18 atomes de carbone.
[Formule chimique 3] HO-(CH₂-CHOH-CH₂-O-)ₙ-H
(dans la formule chimique 3, n est un entier de 1 à 4).

4. Agent de modification pour résine de polyoléfine selon l'une quelconque des revendications 1 à 3, où le composé ester est un monoester de propylène glycol avec de l'acide oléique.

5. Agent de modification pour résine de polyoléfine selon l'une quelconque des revendications 1 à 3, où
le composé ester est au moins un choisi dans le groupe constitué de monoesters de propylène glycol avec un acide monocarboxylique aliphatique ayant 12 à 18 atomes de carbone, et
le tensioactif non ionique est un ester partiel d'un alcool polyhydrique représenté par la formule chimique 3 avec de l'acide oléique.

6. Agent de modification pour résine de polyoléfine selon l'une quelconque des revendications 1 à 5, où
le composé ester est un monoester de propylène glycol avec de l'acide oléique, et
le tensioactif non ionique est un ester partiel d'un alcool polyhydrique représenté par la formule chimique 3 avec de l'acide oléique.

7. Agent de modification pour résine de polyoléfine selon l'une quelconque des revendications 1 à 6, où le sel d'acide sulfonique organique est au moins un choisi dans le groupe constitué de sels de métal alcalin d'un acide alkylsulfonique ayant 6 à 22 atomes de carbone dans le groupe alkyle.

8. Composition de résine de polyoléfine comprenant l'agent de modification pour résine de polyoléfine selon l'une quelconque des revendications 1 à 7 et une résine de polyoléfine, où l'agent de modification pour résine de polyoléfine est contenu dans la résine de polyoléfine à un rapport de 0,45 % à 5,0 % en masse.

9. Film de résine de polyoléfine modifié formé à partir de la composition de résine de polyoléfine selon la revendication 8.

10. Film de résine de polyoléfine modifié comprenant l'agent de modification pour résine de polyoléfine selon l'une quelconque des revendications 1 à 7 à un rapport de 0,45 % à 5,0 % en masse.

11. Film stratifié dans lequel au moins une couche de surface est composée d'une couche de résine faite de la composition de résine de polyoléfine selon la revendication 8.

12. Film stratifié dans lequel au moins une couche de surface est composée d'une couche de résine contenant l'agent de modification pour résine de polyoléfine selon l'une quelconque des revendications 1 à 7 à un rapport de 0,45 % à 5,0 % en masse.
